Europäisches Patentamt

(19) European Patent Office

Office européen des brevets

(11) Publication number: **0 082 377**
**A1**

(12) # EUROPEAN PATENT APPLICATION

(21) Application number: **82111206.7**

(22) Date of filing: **03.12.82**

(51) Int. Cl.³: **F 16 L 27/08**
**F 16 L 3/00, E 21 B 43/26**

(30) Priority: **04.12.81 US 327324**

(43) Date of publication of application:
**29.06.83 Bulletin 83/26**

(84) Designated Contracting States:
**DE FR GB IT NL**

(71) Applicant: **FMC CORPORATION**
**200 E. Randolph Drive**
**Chicago Illinois 60601(US)**

(72) Inventor: **Moller, Thomas Allen**
**11256 Essex Avenue**
**Pomona Los Angeles California 91766(US)**

(74) Representative: **Bardehle, Heinz, Dipl.-Ing. et al,**
**Patent- und Rechtsanwälte**
**Bardehle-Pagenberg-Dost-Altenburg & Partner Postfach**
**86 06 20**
**D-8000 München 86(DE)**

(54) Extendable support for telescoping boom.

(57) An extendable support for a telescoping boom (10) having an inner boom section (10a) pivotally connected to a mobile vehicle and having one or more extendable sections movably connected to the inner boom section. An extendable support jack (11a) connected between ground and the inner boom section provides support for an outer end of the inner boom section and for the inner end of the extendable boom section. An additional jack connected between ground and an outer end of the extendable boom section provides additional support for the boom. More support jacks (11b), (11c), ... (11n) can be included to support additional extendable boom sections above ground.

FIG_1

EP 0 082 377 A1

## BACKGROUND OF THE INVENTION

### Field of the Invention

This invention relates to well service equipment, and more particularly, to an extendable support for a telescoping boom which supports apparatus for conducting pressurized fluids from a service vehicle to a wellhead.

### Description of the Prior Art

During the course of producing fluids from a petroleum well it is often desirable or necessary to subject the well to a treatment procedure in order to stimulate its fluid production. This procedure usually involves the injection of fluid under high pressure, such as 20,000 psi, to fracture the producing earth formation, or the injection of an acid solution to dissolve or otherwise remove flow obstructing material, thereby increasing the flow of petroleum from the formation into the well. In order to carry out these well stimulation procedures, it is commonplace to employ an articulated pipe assembly, called a service line, to conduct the fluid from a pump system to the wellhead. Such a service line usually comprises a plurality of straight links of rigid pipe interconnected end-to-end by pipe swivel joints, and the entire service line is supported by an extendable boom having one end thereof pivotally connected to the service vehicle.

The articulated service pipe line is mounted on and supported at all times by a mobile telescoping boom assembly that can be extended from its transport base to carry the service line to a wellhead for connection thereto and for retracting the service pipe line for transport from one location to another. One end of the telescoping boom is pivotally connected to a mobile transport vehicle and the other portion of the boom is raised and lowered by one or more hydraulic jacks which are connected between the transport vehicle and a portion of the telescoping boom. When the telescoping boom is extended from the side of the transport vehicle the boom produces a moment about the inner end of the boom so a plurality of outriggers must be connected between the vehicle and ground to prevent the transport vehicle from tilting or tipping in the direction of the extended boom. Even when the outriggers are used to stabilize the vehicle the length of the boom is limited.

SUMMARY OF THE INVENTION

The present invention overcomes the foregoing disadvantages by providing apparatus for supporting a telescoping boom above ground so that a relatively long boom can be used to carry the service line without tipping the mobile transport vehicle even when outriggers are not used. The boom includes an inner section and one or more extendable sections movably connected to the inner section. The inner end of the inner section is pivotally connected to the mobile vehicle and an extendable support jack is connected between ground and an outer portion of the inner section to provide support. Additional jacks are connected between ground and the outer ends of each of the extendable sections. One or more wheels may be rotatably connected to a lower end of the inner support jack to facilitate moving the support jack along the ground to orient the extendable boom about the mobile vehicle.

BRIEF DESCRIPTION OF THE DRAWINGS

Figure 1 is a diagrammatic side elevation of a telescoping boom having an extendable support, showing the boom in the retracted position and with the support in position for transportation on a transport vehicle.

Figure 2 is an end elevation of the transport vehicle of Figure 1 with the telescoping boom projecting from one side of the vehicle and showing the extendable support resting on the ground with outriggers extending from the sides of the transport vehicle.

Figure 3 is an end elevation of another embodiment of the telescoping boom of Figure 1 wherein the extendable support eliminates the need for an outrigger.

Figure 4 is a perspective of a portion of an extendable support similar to that shown in Figure 3.

Figure 5 is an end elevation of another embodiment of the telescoping boom of Figure 1.

Figure 6 is an end elevation of another embodiment of Figure 1 wherein hydraulic jacks are used to support the outer end of each of the several sections of the telescoping boom.

## DESCRIPTION OF THE PREFERRED EMBODIMENT

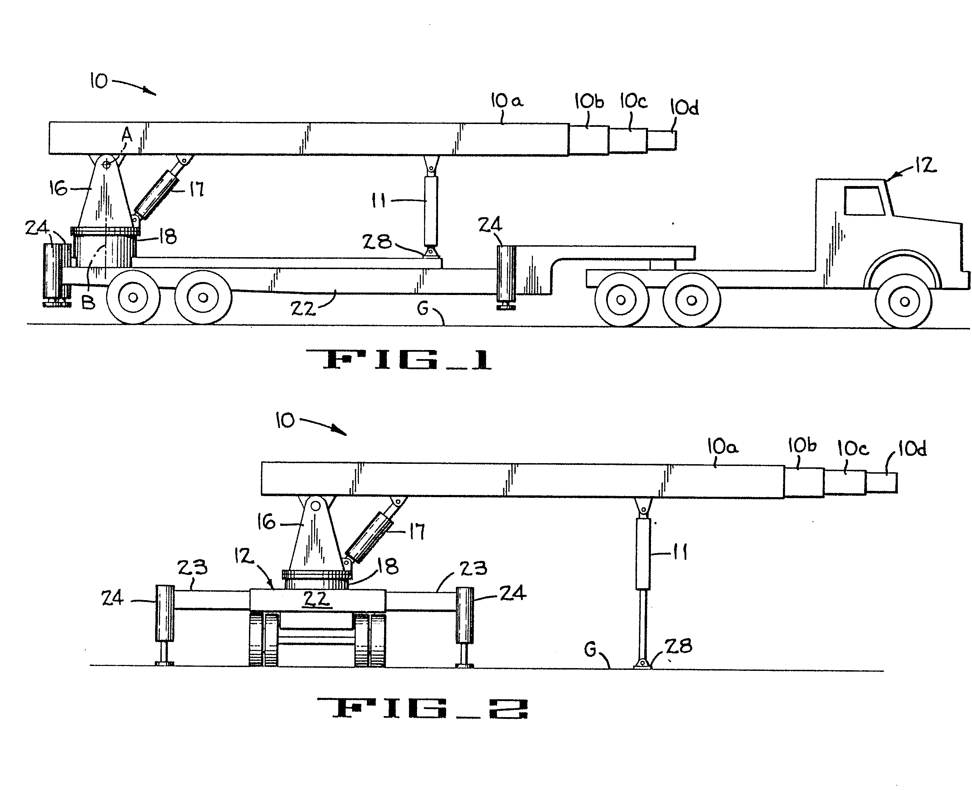

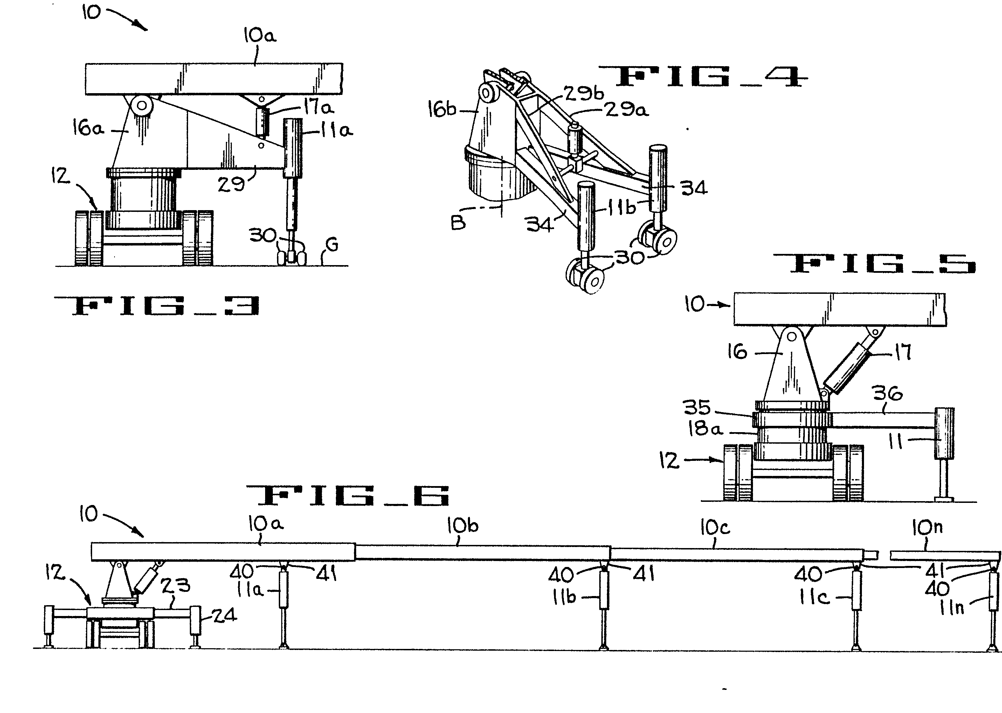

As shown in Figures 1 and 2 a telescoping boom assembly 10 having an extendable support 11 is mounted on a mobile transport vehicle 12. The telescoping boom assembly 10 comprises a plurality of boom sections 10a - 10d. The inner section 10a which is not extendable, is pivotally mounted on a turret 16 for rotation in a vertical plane about a horizontal axis A by an elevating cylinder 17. The turret 16 (Fig. 1) is mounted on a cylindrical base 18 for rotation about a vertical axis B, and the entire apparatus is suitably mounted on a subframe platform 22 with extendable stabilizing outriggers 23 and installed on a suitable mobile transport vehicle 12 such as a truck chassis, for moving the apparatus to the job sites. The apparatus may also be mounted directly on the vehicle. The extendable support 11 provides support between the transport vehicle and the outer end of boom sections 10a - 10d when the boom assembly is in position for transportation as shown in Figure 1.

When the transport vehicle 12 is adjacent to the job site one or more outriggers 23 (Fig. 2) can be moved outwardly from the vehicle 12 and the outrigger jacks 24 extended to provide support for the boom assembly. The boom assembly 10 is then rotated outward to a position over the rear or to one side of the vehicle (Fig. 2) while being supported by the elevating cylinder 17, and a support foot 28 of the extendable support 11 is lowered to the ground G to provide support for the outer end of the inner boom section 10a. When the support 11 is used to stabilize the boom section 10 the outriggers 23 need be only large enough to support the retracted boom assembly 10 while the assembly is rotated from the position shown in Figure 1 to the position shown in Figure 2.

The embodiment of the present invention disclosed in Figure 3 includes a modified turret 16a having an extension 29 projecting radially outward from the central portion of the turret. An elevating cylinder 17a is mounted between the extension and the inner boom section 10a to rotate the boom in a vertical plane. An extendable support 11a connected between ground G and the outer end of the extension 29 provides support for the outer portion of the inner boom section 10a so outriggers are not needed. A plurality of support wheels 30 connected to the lower end of support 11a facilitate movement of the support 11a along the ground to position the boom 10 about the transport vehicle 12.

Another modified turret 16b (Fig. 4) includes a pair of radial extensions 29a, 29b each having an extendable support or jack 11b positioned between ground and the outer end of the extensions 29a, 29b. A lower arm portion 34 of the extensions 29a, 29b can also be extendable to move the jacks 11b further from the vertical axis B. The jacks 11b can also be fitted with support wheels 30 in the manner disclosed in Figure 3, and if more support is needed additional extensions of the type 29a, 29b and more jacks 11b can be included.

The embodiment of the present invention disclosed in Figure 5 includes a cylindrical base 18a with a platform 35 rotatably mounted atop the base 18a and the turret 16 rotatably mounted atop the platform 35. The platform 35 includes one or more radial arms 36 each having one or more jacks 11 connected between ground and the outer end of the arm. During the time the extendable boom assembly 10 is moving to a work site, the boom assembly 10 and the arm 36 are aligned generally along the length of the transport vehicle 12 as shown in Figure 1.

Upon arrival of the work site the platform 35 is first rotated until the arm 36 is pointed generally toward the direction in which the boom assembly 10 is to be directed. The jack 11 is then extended to provide support to hold the arm 36 in a generally horizontal plane and the turret 16 rotated to a position above the platform arm 36. The extendable boom sections 10b - 10d (Fig. 1) are then extended the desired distance toward a work area (not shown).

The various embodiments of Figures 1 - 5 can each include a boom assembly having a large number of boom sections 10a - 10n as shown in Figure 6 with the outer end of each section supported above ground G by a corresponding one of a plurality of jacks or extendable supports 11a - 11n. The jacks 11a - 11n can each be permanently connected to a corresponding one of the boom sections by a pin 40 and an ear 41 or the jacks 11a - 11n can be disconnected from the boom sections by removing the pins 40 when the boom sections are retracted for transporting the boom assembly to a work site. The jacks 11a - 11n are then reconnected to the boom sections as the sections are to be extended. Bolts or other fasteners can also be used to attach the jacks to the boom. The number of boom sections in the boom assembly and the length to which the supported boom can be extended are limited only by the physical diameter of the inner and outer boom sections and by the weight of the boom assembly. The jacks absorb the weight of the various boom sections so the outriggers need not be any larger than the outriggers used with the shorter boom assemblies.

Although the best mode contemplated for carrying out the present invention has been herein shown and described, it will be apparent that modification and variation may be made without departing from what is regarded to be the subject matter of the invention.

What is claimed is:

1.  An extendable apparatus for supporting a telescoping boom above the ground for use with a boom mounted on a mobile transport vehicle, said apparatus comprising:

a boom having a primary section and at least one extendable section movably connected to said primary section;

means for pivotally connecting an inner end portion of said primary section to said mobile vehicle; and

an extendable support jack connected between ground and said primary section for supporting an outer end of said primary section relative to ground.

2.  An extendable support apparatus as defined in claim 1 including at least one wheel rotatable connected to a lower end of said support jack to facilitate moving said support jack along the ground to orient said boom about said mobile vehicle.

3.  An extendable support apparatus as defined in claim 1 including at least one additional support jack and means for connecting said additional jack between ground and an outer end of said extendable boom section for supporting the outer end of said extendable boom section.

4.  An extendable boom support as defined in claim 1 including an additional jack connected to an outer portion of said extendable section to provide support for said extendable section.

5. An extendable apparatus for supporting a telescoping boom for use with a mobile transport vehicle, said boom having a primary section and at least one extendable section connected to said primary section, said support comprising:

a universal joint means for mounting an inner end of said primary section on said mobile vehicle;

power means for elevating said telescoping boom relative to said inner end of said primary section;

a support jack connected to an outer portion of said primary section for elevating said outer portion of said primary section and

a support member connected to a lower end of said jack for supporting said support jack.

6. Extendable apparatus for supporting a telescoping boom above ground for use with a boom mounted on a mobile transport vehicle, said apparatus comprising:

a boom having a primary section and a plurality of extendable sections movably connected to said primary section;

means for pivotally connecting an inner end portion of said primary boom section to said mobile vehicle;

power means for elevating an outer portion of said primary boom section relative to said inner end; and

a plurality of extendable support jacks each connected to an outer portion of a corresponding one of said boom sections for supporting said boom sections above ground.

7.    Extendable support apparatus as defined in claim 6 including a rotatable turret mounted on said mobile vehicle, said turret having a radially extending portion, means for pivotally connecting said inner end portion of said inner boom section to said turret, first and second extendable supports, means for connecting said first extendable support between ground and said extending portion of said turret, and means for connecting said second extendable support between said inner boom section and said extending portion of said turret.

8.    Extendable support apparatus as defined in claim 7 including at least one wheel connected to a lower end of said first extendable support to facilitate moving said first extendable support along the ground to orient said boom about said mobile vehicle.

FIG_1

FIG_2

0082377

FIG_3

FIG_4

FIG_5

FIG_6

2/2

0082377

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 824 944 (P.EILER) *Claims 1-7; figures 1-5* | 1,5,6 | F 16 L 27/08 F 16 L 3/00 E 21 B 43/26 |
| A | US-A-3 942 554 (WERNER et al.) *Abstract* | 1 | |
| P,A | EP-A-0 061 070 (FMC CORPORATION) *Abstract* | 1 | |
| P,A | EP-A-0 060 507 (FMC CORPORATION) *Abstract* | 1 | |

---

TECHNICAL FIELDS SEARCHED (Int. Cl. 3)

F 16 L
E 21 B

The present search report has been drawn up for all claims

| Place of search THE HAGUE | Date of completion of the search 11-03-1983 | Examiner ANGIUS P. |
|---|---|---|